# EUROPÄISCHE PATENTSCHRIFT

(11) **EP 3 628 428 B1**
(45) Veröffentlichungstag und Bekanntmachung des Hinweises auf die Patenterteilung: **29.05.2024**
(21) Anmeldenummer: 18196573.2
(22) Anmeldetag: 25.09.2018
(51) Int. Cl.: B23F 19/02, B23F 17/00

(54) **VORRICHTUNG UND VERFAHREN ZUM LÄPPEN VON ZAHNRADPAAREN**
METHOD AND DEVICE FOR LAPPING GEAR PAIRS
DISPOSITIF ET PROCÉDÉ DE RODAGE DES ENGRENAGES À DEUX ROUES DENTÉES

(43) Veröffentlichungstag der Anmeldung: 01.04.2020
(73) Patentinhaber: Klingelnberg AG, 8050 Zürich (CH)
(72) Erfinder: HERZHOFF, Stefan, 42499 Hückeswagen (DE)
(74) Vertreter: Janke Scholl Patentanwälte PartG mbB

(56) Entgegenhaltungen:
- EP-A2- 0 353 451
- JP-A- 2004 042 178
- JP-A- 2005 288 611
- JP-A- 2018 034 255
- JP-B2- 6 049 137
- US-A1- 2017 291 239

## Beschreibung

### Gebiet der Erfindung

Gegenstand der Erfindung ist eine Vorrichtung und ein Verfahren. Insbesondere geht es um Vorrichtungen und Verfahren zum Läppen von Radsatzpaaren.

### Hintergrund der Erfindung, Stand der Technik

Im Rahmen der Fertigung von Kegelrädern kommt häufig ein Läppverfahren zur Hart-Feinbearbeitung zum Einsatz. Das Läppen ist ein Verfahren, das zur Hart-Feinbearbeitung (Fertigbearbeitung nach dem Härten) der Zahnflächen von Kegelradpaaren (Kegelgetrieben) oder Hypoidradpaaren (Hypoidgetrieben) eingesetzt wird. Anders als das Verzahnungsschleifen, bei dem Abrasivkörner fest in der Matrix des Schleifwerkzeugs gebunden und dadurch die Schneidbahn geometrisch bestimmt ist, arbeitet das Läppen mit losen Partikeln, die mit einer geeigneten Trägerflüssigkeit eine Suspension (Läppflüssigkeit oder Läppmittel genannt) bilden. Das Läppmittel wird zum Zwecke des Läppens in den Eingriffsbereich zwischen den Rädern des Radsatzpaares so eingebracht, dass sich zwischen den beiden Rädern - unter Vorgabe einer spezifischen Drehmomentlast - ein abrasiver Materialabtrag ergibt. Gleichzeitig sorgt das Läppen für das Einlaufen der Räder des Radsatzpaares. Das Dokument EP 0 353 451 A2, das den der Erfindung nächstliegenden Stand der Technik darstellt, beschreibt ein Läppverfahren, sowie eine Gesamtvorrichtung gemäß dem Oberbegriff des Anspruchs 11.

Das Durchführen eines Läppverfahrens an Kegelrädern und Hypoidrädern bedingt einen speziellen Maschinenaufbau mit einer entsprechenden Achsanordnung, wobei eine solche Läppmaschine mindestens fünf Achsen (z.B. drei Linearachsen und zwei Rotationsachsen) aufweist, die bewegt werden können. Zusätzlich kann eine Läppmaschine eine Achswinkelverstellung aufweisen.

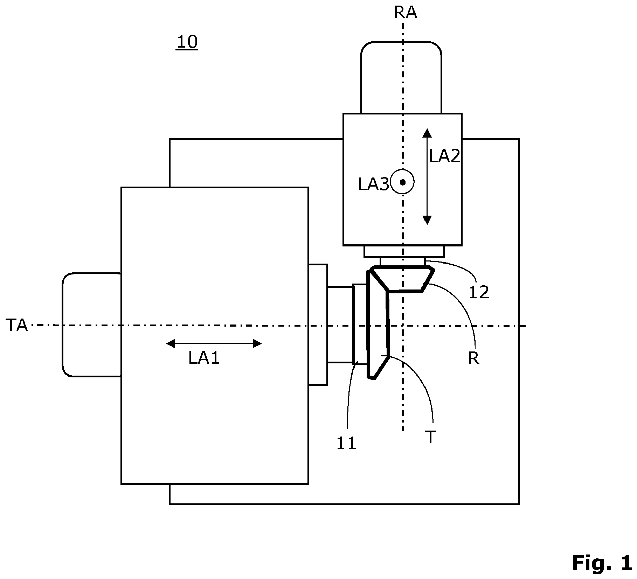

Die Draufsicht einer beispielhaften Läppmaschine 10 ist in Fig. 1 in stark vereinfachter Form gezeigt. Eine Läppmaschine 10 umfasst beispielsweise eine erste Spindel 11 zum Aufnehmen eines Tellerrads T, wobei das Tellerrad T im eingespannten Zustand um die Tellerradachse TA drehbar gelagert ist. Ausserdem gibt es eine zweite Spindel 12, die zum Aufnehmen eines Ritzels R ausgelegt ist. Die zweite Spindel 12 ermöglicht das Drehen des Ritzels R um die Ritzelachse RA.

Die in Fig. 1 beispielhaft gezeigte Läppmaschine 10 besitzt insgesamt fünf Achsen, um die Eingriffsdrehungen und die für das Läppen erforderlichen Bewegungen (zum Verschieben des Läppbereichs) zwischen Ritzel R und Tellerrad T zu ermöglichen. Insgesamt sind bei der gezeigten Läppmaschine 10 die folgenden fünf Achsen vorgesehen: zwei Rotationsachsen TA, RA für die Eingriffsdrehung und drei Linearachsen LA1, LA2, LA3. Die Achsen können auch anders angeordnet sein.

Die Läppmaschine 10 der Fig. 1 ermöglicht eine Relativbewegung parallel zu der Tellerradachse TA und eine Relativbewegung parallel zu der Ritzelachse RA. Zusätzlich kann typischerweise der Abstand (zum Beispiel durch den Einsatz der LA3-Linearachse) zwischen der Tellerradachse TA und der Ritzelachse RA verstellt werden. Die entsprechenden Linearverschiebungen dienen auch dazu das Einbaumass des zu läppenden Radsatzpaares anzupassen.

Nachdem in einer solchen Läppmaschine 10, wie in Fig. 1 schematisch gezeigt, ein Tellerrad T an einer ersten Spindel 11 und ein damit zu paarendes Ritzel R an einer zweiten Spindel 12 befestigt wurde, wird typischerweise das Ritzel R angetrieben während das Tellerrad T im Eingriff mit dem Ritzel R mitläuft bzw. gebremst wird. Während die beiden Räder T und R so eine kontinuierliche Eingriffsdrehung ausführen, kommt das Läppmittel (z.B. ein Öl mit Siliziumcarbid) als Schleifmittel zum Einsatz. Die erwähnte(n) Bewegung(en) werden beim Läppen ausgeführt, um die Läppwirkung auf die Zahnflankenoberfläche beider Räder T und R zu erstrecken.

Von den Herstellern von Läppmaschinen werden Maschinen angeboten, die sich im Wesentlichen durch unterschiedlich ausgelegte Relativbewegungen voneinander unterscheiden. Einige Läppmaschinen können drei Linearbewegungen ausführen, wobei die beiden Horizontalbewegungen LA1, LA2 ein Muss sind, da sonst eine Verschiebung des Ritzels R sehr schnell zum Aufbrauchen des Flankenspiels und zum Klemmen führt, wenn das Tellerrad T nicht entsprechend mitbewegt würde. Eine Vertikalachse LA3 wird für das Läppen von Hypoidgetrieben zur Einstellung des Achsversatzes benötigt und kann natürlich auch zur Tragbildverlagerung beim Läppen benutzt werden.

Aus der publizierten Patentanmeldung EP2875893A1 ist eine Vorrichtung bekannt, die als Testmaschine und als Läpper ausgelegt ist. Diese Vorrichtung umfasst drei Linearachsen LA1, LA2, LA3, die zusammen ein kartesisches Koordinatensystem bilden. Ausserdem umfasst diese Vorrichtung zwei Spindelgruppen mit je einer Spindel-Rotationsachse.

Aus dem Patent EP2079556B1 sind eine andere Läppmaschine und ein Verfahren zum kontrolliert gesteuerten Läppen bekannt.

Die gleichzeitige Bearbeitung der beiden Räder erhöht die Produktivität des Verfahrens. Das Läppen zeigt jedoch eine deutliche Abhängigkeit der Abtragswirkung von der Ausgangsgeometrie der Räder nach dem Härten.

Beim Fräsen und Schleifen von Zahnrädern ist es möglich die zu erzeugende Mikrogeometrie rechnerisch zu ermitteln und die Fräs- und Schleifverfahren entsprechend, z.B. in einem Closed-Loop Ansatz, zu steuern. Eine genaue Vorhersage der Abtragswirkung und der Mikrogeometrie der Zahnflanken der Räder ist hingegen bisher beim Läppen nur bedingt möglich.

Das liegt unter anderem daran, dass es beim Läppen eine ganze Reihe von Größen (z.B. die Oberflächenhärte der Zahnflanken, die aktuelle Topografie der Zahnflanken nach dem Härten, die Konzentration, Größe und Beschaffenheit der Partikel des Läppmittels, die Schmierwirkung des Läppmittels, usw.) gibt, die einen direkten oder indirekten Einfluss auf die Abtragsleistung haben. Außerdem ist zu berücksichtigen, dass die Abtragsleistung aufgrund dynamischer Einflüsse von Punkt zu Punkt variiert. Weiterhin ist der Materialabtrag am Ritzel grösser als am Tellerrad, da das Ritzel weniger Zähne hat.

Es gibt Ansätze zur Berechnung von abrasiven Verschleißvorgängen, wie sie beim Verzahnungsläppen auftreten, aber eine genaue Berechnung oder eine technische Simulation der Vorgänge ist bis heute nicht möglich, zumal es zahlreiche nicht-lineare Zusammenhänge gibt, die berücksichtigt werden müssen.

Daher spielt bis heute beim Verzahnungsläppen die Erfahrung des Maschinenbedieners eine große Rolle.

Aufgabe der vorliegenden Erfindung ist es das Verzahnungsläppen von Zahnradpaaren effizienter zu gestalten und das Verzahnungsläppen kontrollierter einsetzen zu können.

Ein Verfahren der Erfindung zeichnet sich durch die Merkmale des Patentanspruchs 1 aus. Eine Vorrichtung der Erfindung zeichnet sich durch die Merkmale des Patentanspruchs 11 aus.

Die Erfindung setzt bei mindestens einem Teil der Ausführungsformen auf einen neuartigen Closed-Loop Ansatz, bei dem ein erstes Zahnradpaar, das ein Ritzel und ein Tellerrad umfasst, in einem ersten Durchlauf geläppt wird. Dieser erste Durchlauf dient dazu für das Zahnradpaar einen Ease-Off zu erzielen, der einem Soll-Ease-Off entspricht oder der dem Soll-Ease-Off innerhalb von Toleranzen angenähert ist. Die Zahnflanken des Zahnradpaares werden nach dem Läppen gemessen, um den Ist-Ease-Off rechnerisch und/oder analytisch ermitteln zu können. Eine etwaige Abweichung des Ist-Ease-Off vom Soll-Ease-Off wird dazu verwendet, um entweder für ein erneutes Läppen des ersten Zahnradpaares eine Korrektur oder Kompensation der Läpp-Prozedur vorzunehmen, oder um für das Läppen eines weiteren Zahnradpaares eine Korrektur oder Kompensation der Läpp-Prozedur vorzunehmen, die zuvor zum Läppen verwendet wurde. Das erneute Läppen des ersten Zahnradpaares wird nur dann vorgenommen, wenn das erste Zahnradpaar nach dem Durchführen der ersten Läpp-Prozedur ein ausreichend großes Aufmass aufweist. Ohne ausreichendes Aufmass ist es nicht sinnvoll das erste Zahnradpaar erneut zu läppen.

Die Erfindung setzt bei mindestens einem Teil der Ausführungsformen auf eine Art des Closed-Loop Ansatzes, der in einem gewissen Rahmen als selbstoptimierendes System betrachtet werden kann. Das Prinzip der Selbstoptimierung hat jedoch beim Läppen gewissen Grenzen, da das Läppen nur einen geringen Materialabtrag ermöglicht und da das Läppen stets auf empirisch ermittelten und/oder auf simulationsbasierten Werten aufbaut. Außerdem geht es beim Läppen stets um die Paarung zweier Räder. Dadurch, dass die Erfindung auf die Vorgabe eines Soll-Ease-Off und den Vergleich mit einem Ist-Ease-Off setzt, können jedoch auch hier die Stärken eines Closed-Loop Ansatzes nutzbar gemacht werden.

Es handelt sich bei dem Verfahren der Erfindung um einen Closed-Loop Ansatz, wobei das Verfahren so gesteuert bzw. beeinflusst wird, dass es bei dem Läppen mindestens eines Zahnradpaares, oder bei dem Läppen mehrerer Zahnradpaare einer Menge baugleicher Paare schnell zu einer Konvergenz in Richtung des gewünschten Soll-Ease-Off kommt.

Als baugleiche Zahnradpaare werden hier Kegelrad- oder Hypoidradpaare bezeichnet, die auslegungsgleich sind. D.h. es handelt sich um Zahnradpaare, die theoretisch identisch sind. Da es aber bei der Fertigung und Handhabung von Zahnradpaaren zu Streuungen kommt, sind die Zahnradpaare in der Praxis nicht identisch. Es handelt sich zum Beispiel um die Zahnradpaare eines Fertigungsloses oder einer Serienfertigung.

Bei mindestens einem Teil der Ausführungsformen kann der Soll-Ease-Off verwendet werden, um eine Menge von baugleichen Zahnradpaaren zu definieren. Die Zahnradpaare dieser Menge werden als baugleich angesehen, wenn sie - jeweils als Paar betrachtet - ein identisches oder nahezu gleiches Tragbild haben.

Bei mindestens einem Teil der Ausführungsformen geht es um das Läppen von Kegelradpaaren und von Hypoidradpaaren. Insbesondere geht es um das Läppen von baugleichen Kegelradpaaren und baugleichen Hypoidradpaaren.

Die Erfindung setzt bei mindestens einem Teil der Ausführungsformen auf eine Art des Closed-Loop Ansatzes, bei dem eine erste Läpp-Prozedur durch die Verwendung von Abtragsgrössen (z.B. in Form von Abtragskoeffizienten) gezielt gesteuert wird. Die Abtragsgrössen definieren das Abtragsverhalten des Läppens. Es kann durch den Einsatz des Verfahrens der Erfindung bereits für ein erstes Zahnradpaar nach dem Läppen ein Ease-Off erzielt werden, der einem Soll-Ease-Off innerhalb von Toleranzen angenähert ist. Unter Umständen ist nach dem Durchführen der ersten Läpp-Prozedur das Durchführen einer zweiten, angepassten Läpp-Prozedur erforderlich, um den Soll-Ease-Off zu erzielen.

Die Zahnflanken des Zahnradpaares werden nach dem Läppen gemessen, um den Ist-Ease-Off rechnerisch und/oder analytisch zu ermitteln. Eine etwaige Abweichung des Ist-Ease-Off vom Soll-Ease-Off wird dann dazu verwendet, um für das erneute Läppen des Zahnradpaares oder für das Läppen eines weiteren Zahnradpaares eine Korrektur oder Kompensation vorzunehmen. Damit gelingt es das Läppen so zu steuern, dass der Ist-Ease-Off möglichst in einem durch den Soll-Ease-Off definierten Zielkorridor gehalten wird.

Bei mindestens einem Teil der Ausführungsformen werden im Rahmen eines iterativen Ansatzes, der zum Läppen von mindestens einem Zahnradpaar einer Mehrzahl von baugleichen Zahnradpaaren ausgelegt ist, der Soll-Ease-Off und der Ist-Ease-Off eines ersten Zahnradpaares verwendet, um korrigierend und zielgerichtet in das Läppverfahren dieses ersten Zahnradpaares - falls dieses Paar nach einer ersten Läpp-Prozedur ein ausreichend großes Aufmass hat, um eine zweite, angepasste Läpp-Prozedur durchzuführen - oder in das Läppverfahren eines zweiten Zahnradpaares eingreifen zu können. Dieser Eingriff führt zu einem schnellen Konvergieren des Verfahrens.

Das Verfahren der Erfindung setzt auf eine Definition des Eingriffs der beiden Räder, wenn diese miteinander gepaart sind. Dieser Eingriff wird - wie beschrieben - anhand des Ease-Off beschrieben. Außerdem setzt die Erfindung auf eine Feinbearbeitung der Flanken mittels einer Läpp-Prozedur, die in einer Art eines Closed-Loop Ansatzes sukzessive korrigiert wird. Bei einem solchen Closed-Loop Läpp-Verfahren kommt kein Nachbearbeitungswerkzeug zum Einsatz, sondern die beiden Räder werden unter Einsatz eines Läppmittels miteinander abgewälzt, um einen Soll-Ease-Off zu erzielen.

Bei mindestens einem Teil der Ausführungsformen wird darauf aufgebaut, dass das Abtragsverhalten, respektive die Abtragsleistung oder -arbeit, zuvor empirisch und/oder durch Simulation ermittelt wurde. Das Abtragsverhalten kann z.B. dadurch empirisch ermittelt werden, dass das Läppverfahren an mehreren Radsatzpaaren durchgeführt und analysiert wird. Beim wiederholten Durchführen dieses Läppverfahrens können z.B. die Drehzahl und das Bremsmoment für mehrere Punkte einer Punktemenge erfasst werden, wobei während des Durchführens dieses Läppverfahrens die Relativlage der beiden Räder des Radsatzes verändert und auch die Relativlage für die jeweiligen Punkte erfasst wird. D.h. die Drehzahl und das Bremsmoment werden für sich ändernde Relativpositionen erfasst und gespeichert.

Das Abtragsverhalten, respektive die Abtragsleistung oder -arbeit, kann bei allen Ausführungsformen in Form von Abtragsgrössen (z.B. in Form von Abtragskoeffizienten) ermittelt und gespeichert werden.

Bei der Ermittlung des Abtragsverhaltens kann z.B. auch das Bremsmoment für die jeweiligen Punkte erfasst werden, da dieses Moment einen deutlichen Einfluss auf die Abtragsarbeit oder -leistung hat.

Bei der Ermittlung des Abtragsverhaltens kann z.B. auch die Drehzahl für die jeweiligen Punkte erfasst werden, da diese einen deutlichen Einfluss auf die Abtragsarbeit oder -leistung hat.

Bei mindestens einem Teil der Ausführungsformen werden die Abtragsgrössen (z.B. in Form von Abtragskoeffizienten) eingesetzt, um die entsprechende Läpp-Prozedur NC-gesteuert durchführen zu können.

Bei mindestens einem Teil der Ausführungsformen werden die Abtragsgrössen (z.B. in Form von Abtragskoeffizienten) eingesetzt, um die entsprechende Läpp-Prozedur softwaregesteuert simulieren zu können (zum Beispiel in Rahmen einer Rückwärtssimulation einer Läpp-Prozedur).

Bei mindestens einem Teil der Ausführungsformen werden Topografiedaten vor dem Läppen bereit gestellt (diese Daten können aus einer Datenbank geladen werden, durch eine Software bereit gestellt, oder sie können durch eine Meßvorrichtung - z.B. durch ein Koordinatenmessgerät - gemessen werden). Außerdem werden Topografiedaten nach dem Läppen ermittelt (diese Daten können durch eine Meßvorrichtung gemessen werden). Diese Topografiedaten werden miteinander in Bezug gesetzt, d.h. diese Topografiedaten werden relativ zueinander positioniert, um so für mehrere Punkte einer Punktemenge den Unterschied (hier als Abweichung bezeichnet) zwischen dem Soll-Ease-Off und dem Ist-Ease-Off rechnerisch und/oder analytisch ermitteln zu können.

Bei dem erwähnten miteinander in Bezug setzen der Topografiedaten, wird bei mindestens einem Teil der Ausführungsformen darauf gesetzt, dass auch Punkte mit einbezogen werden, die sich beim Läppen nicht ändern. Dabei kann es sich zum Beispiel um (Fix-)Punkte einer Punktemenge handeln, die in einem Bereich des entsprechenden Zahnrades liegen, der beim Läppen nicht durch das Gegenrad erreicht wird. Diese (Fix-)Punkte, an denen beim Läppen kein Abtrag erfolgt ist, werden bei diesen Ausführungsformen dazu eingesetzt, um die Topografiedaten vor dem Läppen mit den Topografiedaten nach dem Läppen in einen eindeutigen Bezug setzen zu können. Z.B. können die Topografiedaten vor dem Läppen an den Punkten eines ersten Meßgitters und die Topografiedaten nach dem Läppen an den Punkten eines zweiten Meßgitters bereit gestellt werden. Das erste Meßgitter kann nun mit dem zweiten Meßgitter in einen eindeutigen räumlichen Bezug gebracht werden, da beide Meßgitter (Fix-)Punkte umfassen, die sich beim Läppen nicht verändert haben. Somit kann die Ist-Geometrie (auch Ausgangsgeometrie oder -topografie genannt) der beiden Räder vor dem Läppen mit der Geometrie der beiden Räder nach dem Läppen eindeutig in Bezug gesetzt werden und es können der Ease-Off vor dem Läppen und der Ease-Off nach dem Läppen berechnet werden.

Die Ausgangsgeometrie oder -topografie kann bei solchen Ausführungsformen z.B. aus einer Datenbank oder einer (Auslegungs-)Software importiert werden. Sie kann aber auch gemessen werden (z.B. durch eine Meßvorrichtung).

Mindestens ein Teil der Ausführungsformen ermöglicht die Vorgabe eines Soll-Ease-Off für mehrere baugleiche Kegelrad- oder Hypoidradpaare und die Durchführung eines kontrollierten, NC-gesteuerten Läppverfahrens, um z.B. bereits ab dem ersten oder beispielweise ab dem zweiten Paar einen Ist-Ease-Off zu erzeugen, der dem Soll-Ease-Off entspricht oder der innerhalb eines Toleranzbereichs, der als Zielkorridor betrachtet werden kann, liegt.

Bei mindestens einem Teil der Ausführungsformen kommt eine Läpp-Prozedur zum Einsatz, deren Abläufe vollständig definiert sind. Zu der Definition dieser Läpp-Prozedur zählt das Festlegen mehrerer Relativpositionen, das Verfahren des einen Rades relativ zum anderen Rad und das Halten (falls ein Halten vorgesehen ist) in den verschiedenen Relativpositionen. Außerdem wird festgelegt, welche Flanke welchen Rades mit welcher Flanke des Gegenrades in Kontakt kommt und welches Rad angetrieben und welches Rad gebremst wird. D.h. es sind bei dieser Läpp-Prozedur die Relativpositionen (Relativlage genannt), die Pfade zwischen diesen Positionen und die Drehmomentlast definiert. Somit kann die Läpp-Prozedur wieder und wieder reproduziert werden und ermöglicht auf diesem Wege eine direkte Vergleichbarkeit der Ergebnisse.

Bei den Ausführungsformen, die auf dem Einsatz einer reproduzierbar durchgeführten Läpp-Prozedur setzen, kann die Korrektur oder Kompensation z.B. auf das lineare Verfahren des einen Rades relativ zum anderen Rad angewendet werden, und/oder die Korrektur oder Kompensation kann auf die Haltedauer des Haltens in den verschiedenen Relativpositionen angewendet werden. Die Korrektur oder Kompensation kann zusätzlich oder alternativ auch auf die Drehmomentlast angewendet werden.

Weitere bevorzugte Ausführungsformen sind den jeweiligen Unteransprüchen zu entnehmen.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1**: zeigt eine schematische Draufsicht einer konventionellen Läppvorrichtung, die dazu ausgelegt ist ein Ritzel und ein Tellerrad in Eingriff zu bringen und miteinander abzurollen;
- **FIG. 2**: zeigt eine schematische Seitenansicht einer Closed-Loop Vorrichtung der Erfindung, die eine Läppvorrichtung und eine Messvorrichtung umfasst;
- **FIG. 3A**: zeigt eine schematische Darstellung einer Ausführungsform, die eine Software als zentrales Element umfasst;
- **FIG. 3B**: zeigt eine schematische Darstellung einer Ausführungsform, die mehrere Softwarekomponenten oder -module umfasst;
- **FIG. 4A**: zeigt eine schematische Darstellung einiger Schritte einer Ausführungsform des Verfahrens in Form eines Flow-Charts;
- **FIG. 4B**: zeigt eine schematische Darstellung weiterer Schritte des Verfahrens der Fig. 4B.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Als Läppen wird hier das ineinander greifende Drehen von zwei Getriebeelementen (z.B. ein Tellerrad Tn und ein Ritzel Rn, wobei n eine ganze Zahl grösser gleich 1 ist) bezeichnet, wobei es im Eingriffsbereich zwischen den Zahnflanken der Getriebeelemente Tn und Rn zum Kontakt kommt und wobei ein Läppmittel eingebracht wird, damit ein gegenseitiger Materialabtrag an den Getriebeelementen Tn und Rn erfolgt. Die Mittel zum Einbringen des Läppmittels sind in den Figuren nicht gezeigt, da dem Fachmann derartige Lösungen hinlänglich bekannt sind. Auch das Läppen von Kegelradverzahnungen als solches wird als bekannt vorausgesetzt.

Es geht bei der Erfindung um eine Art eines Closed-Loop-Ansatzes für das Läppen von einem oder mehr als einem Zahnradpaar anhand eines zuvor definierten Soll-Ease-Off. Der Soll-Ease-Off dient dabei quasi als Zielvorgabe oder Zielkorridor.

Der Ease-Off einer Zahnradpaarung ergibt sich aus dem Zusammenspiel, bzw. Abwälzen der Flankentopographien von Rad und Gegenrad. Der Ease-Off ist als globales Minimum der Abstandsfunktion zwischen Rad und Gegenrad bei deren Durchwälzen im vorgegebenen, konstanten Übersetzungsverhältnis definiert (z.B. mit folgenden Zähnezahlen Z1 = 18, Z2 = 45, ergibt sich ein Übersetzungsverhältnis = 45/18 = 2,5). Der Ease-Off kann auch als Darstellung des Zahnflankenabstandes der Zahnflanken einer Zahnradpaarung betrachtet werden. Der Ease-Off wird typischerweise für eine Vielzahl von Punkten auf den Zahnflanken der beiden Räder Tn, Rn eines Zahnradpaares ermittelt.

Der Soll-Ease-Off eines Zahnradpaares kann bei allen Ausführungsformen im Rahmen eines softwaregestützten Auslegungsverfahrens (z.B. mit der KIMoS^{™}-Software der Firma Klingelnberg GmbH), z.B. bei der Tragbildentwicklung, berechnet/festgelegt werden.

Der Soll-Ease-Off eines Zahnradpaares kann bei allen Ausführungsformen durch mehrere Parameter festgelegt werden. Diese Parameter umfassen beispielsweise die Spiralwinkeldifferenz, die Flankenwinkeldifferenz, die Längs- und/oder Höhenballigkeit, sowie die Verwindung.

Durch den Closed-Loop-Ansatz, der hier beschrieben und beansprucht wird, kann das Läppen in einer Läppvorrichtung 100 durch eine NC-Steuerung gezielt gesteuert werden.

Beim Wälzen der Zähne von Kegelradritzel und Tellerrad eines Kegelradpaares kommt es beim Läppen zum Gleiten in Zahnhöhenrichtung. Bei den Rädern eines Hypoidradpaares ist dem Gleiten in Zahnhöhenrichtung ein Gleiten in Zahnlängsrichtung überlagert. Aus diesen Gleitbewegungen kann die lokale Relativgeschwindigkeit für die Berührpunkte einer Punktemenge berechnet werden. D.h. die an den Berührpunkten wirkenden Relativgeschwindigkeiten kann man rechnerisch ermitteln, wenn die Geometrie der Räder und die Rotationsgeschwindigkeiten um die Rotationsachsen TA und RA bekannt sind (was bei einer NC-gesteuerten Läppvorrichtung 100 der Fall ist). Diese Relativgeschwindigkeit ist eine Größe, die in die Ermittlung einer lokalen Abtragsleistung einfließen kann.

Die Relativgeschwindigkeit der sich kontaktierenden Zahnflanken beschreibt jedoch nur einen Aspekt des Läppens. Zusätzlich wird z.B. auch die abrasive Wirkung der Partikel des Läppmittels ermittelt und berücksichtigt. Dabei müssen beim Läppen die Zahnflanken der beiden Räder Tn, Rn gleichzeitig als Werkstück und als Werkzeug angesehen werden. Es ist zu berücksichtigen, dass es beim Läppen verschiedene Abtragsmechanismen gibt (z.B. ein spanendes Abtragsverhalten und ein pflügendes Abtragsverhalten), die sich hier überlagern. Je nach dominantem Abtragsmechanismus ist daher mit unterschiedlichen Abtragserscheinungen und Abtragsraten, das heißt im Rahmen des Läppverfahrens mit einer unterschiedlichen Abtragsleistung, zu rechnen.

Dabei gibt es eine ganze Reihe von Größen (z.B. die Oberflächenhärte der Zahnflanken, die aktuelle Topografie der Zahnflanken nach dem Härten, die Konzentration, Größe und Beschaffenheit der Partikel des Läppmittels, die Schmierwirkung des Läppmittels, usw.), die einen direkten oder indirekten Einfluss auf die Abtragsleistung haben. Außerdem variiert die Abtragsleistung aufgrund dynamischer Einflüsse von Punkt zu Punkt.

Die Erfindung setzt auf einen Ansatz, der hier als iterativer closed-loop Ansatz bezeichnet wird. Bei diesem iterativen Ansatz wird im Rahmen eines Verfahrensablaufs ein erster Radsatz mittels einer zuvor definierten ersten Läpp-Prozedur geläppt. Dann wird dieser Radsatz vermessen, um rechnerisch und/oder analytisch den Ist-Ease-Off zu ermitteln. Falls dieser Ist-Ease-Off nicht dem gewünschten Soll-Ease-Off entspricht, oder falls der Ist-Ease-Off außerhalb eines Toleranzfensters des Soll-Ease-Off liegt, so werden Korrektur- oder Kompensationswerte KW für das anschließende erneute Läppen des ersten Radsatzes oder für das anschließende Läppen eines weiteren Radsatzes ermittelt. Diese Korrektur- oder Kompensationswerte können bei allen Ausführungsformen z.B. dazu verwendet werden, um die erste Läpp-Prozedur anzupassen (die angepasste erste Läpp-Prozedur wird hier als angepasste Läpp-Prozedur oder als zweite Läpp-Prozedur bezeichnet).

Das Anpassen der Läpp-Prozedur kann iterativ vor dem Läppen eines jeden Radsatzes durchgeführt werden, oder das Anpassen kann von Zeit zu Zeit durchgeführt werden. Im eingeschwungenen Zustand des Verfahrens der Erfindung kann es ausreichen, wenn die Läpp-Prozedur z.B. nur nach jedem 10. Radsatzpaar angepasst wird.

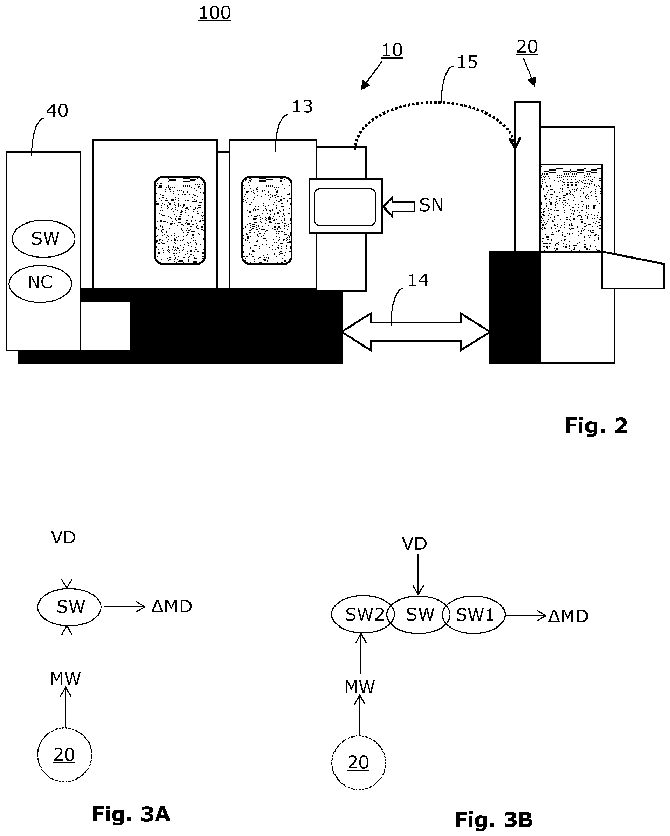

Im Rahmen der Erfindung kann zum Beispiel die Vorrichtung 10 zum Einsatz kommen, die eingangs im Zusammenhang mit Fig. 1 beschrieben wurde. Fig. 2 zeigt diese Vorrichtung 10 (hier im Inneren eines beispielhaft gezeigten Maschinengehäuses 13) zusammen mit einer Meßvorrichtung 20. Die Vorrichtung 10 bildet zusammen mit der Meßvorrichtung 20 eine Gesamtkonstellation, die als Closed-Loop Vorrichtung 100 bezeichnet wird. D.h. die beiden Vorrichtungen 10, 20 sind kommunikationstechnisch so miteinander verbunden, dass z.B. Meßwerte MW, die in der Meßvorrichtung 20 ermittelt wurden, an die Vorrichtung 10 übergeben werden können. Die kommunikationstechnische Verbindung ist hier mit dem Bezugszeichen 14 versehen und ist durch einen Doppelpfeil symbolisiert. In Fig. 2 ist zusätzlich ein Schaltschrank 40 gezeigt, der z.B. die NC-Steuerung NC der Vorrichtung 10 beinhalten kann. In dem Schaltschrank 40, oder an einem anderen Ort der Vorrichtung 100, kann eine Software SW (und/oder eine Software oder ein Software-Modul SW1, SW2) vorgesehen sein, die z.B. dazu ausgelegt ist das Verfahren der Erfindung zu implementieren. Die Software SW ist vorzugsweise bei allen Ausführungsformen in die Kommunikation zwischen den beiden Vorrichtungen 10, 20 eingebunden.

Der Pfeil 15 soll andeuten, dass Zahnradpaar aus der Vorrichtung 10 heraus an die Meßvorrichtung 20 übergeben wird. Diese Übergabe 15 kann bei allen Ausführungsformen manuell, semiautomatisch oder vollautomatisch erfolgen.

Die Läppvorrichtung 10 kann bei allen Ausführungsformen eine Datenschnittstelle oder eine Nutzerschnittstelle SN umfassen, die es ermöglicht die Abtragsgrössen, insbesondere die Läpp-Koeffizienten αL, zu definieren.

Es kann bei allen Ausführungsformen einer der folgenden Ansätze realisiert sein:
- Die Berechnung der Läppeinstellungen bzw. Korrekturen erfolgt auf einem externen Rechner, wobei diesem Rechner der Läpp-Koeffizienten αL vorliegen muß;
- Die Berechnung erfolgt auf Läppvorrichtung 10, wobei der Läppvorrichtung 10 der Läpp-Koeffizienten αL vorliegen muß;
- Die Berechnung der Korrekturen erfolgt auf Messvorrichtung 20, wobei der Messvorrichtung 20der Läpp-Koeffizienten αL vorliegen muß.

Details zur Simulation und zum Bestimmen von Abtragsgrössen sin beispielweise der folgenden Publikation zu entnehmen: "Experimental studies and simulation of hypoid gear lapping", B. Schlecht, F. Rudolph, International Conference on Gear Production 2017, 13.-14. September 2017, Garching bei München.

Die Läppvorrichtung 10 und die Messvorrichtung 20 können miteinander gekoppelt sein, wie durch den Doppelpfeil 14 angedeutet. Der Begriff Kopplung wird verwendet, um anzudeuten, dass die Maschine 10 und die Messvorrichtung 20 zumindest kommunikationstechnisch (d.h. für den Datenaustausch) gekoppelt sind. Diese kommunikationstechnische Kopplung (auch Vernetzung genannt) setzt voraus, dass die Maschine 10 und die Messvorrichtung 20 das gleiche oder ein kompatibles Kommunikationsprotokoll verstehen und dass beide gewissen Konventionen folgen, was den Datenaustausch anbelangt. Für den Datenaustausch kann z.B. eine Software oder ein Software-Modul SW2 zum Einsatz kommen, wie später noch beschrieben wird.

Der Begriff Kopplung kann auch bedeuten, dass die Maschine 10 und die Messvorrichtung 20 nicht nur vernetzt sondern auch mechanisch miteinander verbunden oder komplett integriert sind. Die Messvorrichtung 20 kann bei allen Ausführungsformen in die Maschine 10 integriert oder mit dieser direkt verbunden sein.

Die Maschine 10 und die Messvorrichtung 20 können bei allen Ausführungsformen einen geschlossenen Bearbeitungs- und Kommunikationskreis (closed-loop genannt) bilden.

Die verschiedenen Achsen der Maschine 10 und/oder die verschiedenen Achsen der Messvorrichtung 20 können bei allen Ausführungsformen beispielsweise von einer gemeinsamen NC-Steuerung (die z.B. in dem Schaltschrank 40 angeordnet sein kann) kontrolliert werden.

Es ist aber auch möglich, sowohl die Maschine 10 als auch die Messvorrichtung 20 je mit einer eigenen NC-Steuerung auszustatten. In diesem Fall kann die Vernetzung zum Datenaustausch z.B. zwischen den NC-Steuerungen (z.B. über ein Netzwerk) etabliert werden.

Die Maschine 10 und/oder die Messvorrichtung 20 können bei allen Ausführungsformen beispielsweise von einer gemeinsamen Software SW (die z.B. in dem Schaltschrank 40 installiert sein kann) kontrolliert werden.

Es handelt sich bei denjenigen Achsen, die von einer NC-Steuerung kontrolliert werden, um numerisch kontrollierte Achsen. Durch eine solche Konstellation können die einzelnen Achs-Bewegungen numerisch von der/den NC-Steuerung/en gesteuert werden. Wichtig ist, dass die einzelnen Bewegungen der Achsen der Maschine 10 beim Läppen so vorgenommen werden, wie anhand eines Ablaufs oder eines Ablaufprogramms für die Läpp-Prozedur festgelegt. So können die Bewegungen der Achsen der Maschine 10 koordiniert und reproduzierbar erfolgen. Diese Koordinierung der Bewegungen kann bei allen Ausführungsformen durch die NC-Steuerung 40 und/oder die Software SW vorgenommen werden.

Mit einer geeigneten Software oder einem Software-Modul SW1 (z.B. mit der Software KIMoS^{™} der Firma Klingelnberg GmbH, Deutschland) wird der Soll-Ease-Off für ein Zahnradpaar (hier als Zahnradpaar Tn, Rn bezeichnet) vorgegeben. Eine Software oder ein Software-Modul SW1 kann z.B. am Ende eines Auslegungsprozesses den Soll-Ease-Off in Form eines Datensatzes, der z.B. wie eine Matrix organisiert sein kann, bereitstellen. Dieser Datensatz definiert im Prinzip die Paarung eines Tellerrades T1 und eines Ritzels R1. Anhand des Datensatzes kann die hierzu erforderliche Maschinenkinematik für das Läppen der beiden Räder T1, R1 ermittelt werden. Das Läppen der beiden Räder T1, R1 eines ersten Zahnradpaares wird hier als erste Läpp-Prozedur bezeichnet. Die Maschinenkinematik der ersten Läpp-Prozedur kann z.B. anhand eines (Daten-) Modells der zu verwendenden Maschine 10 und unter Verwendung von Abtragsgrössen (z.B. in Form von Abtragskoeffizienten) simulativ ermittelt oder berechnet werden.

Da es auch andere Ansätze gibt, um den Soll-Ease-Off des ersten Zahnradpaares vorzugeben, wird im Folgenden für die entsprechenden Daten der Oberbegriff Vorgabedaten VD verwendet, wobei diese Vorgabedaten VD quasi den Eingriff der beiden Räder T1, R1 definiert, wenn diese miteinander gepaart werden.

Die Vorgabedaten VD können bei allen Ausführungsformen auch die Maschinenkinematik beschreiben (wobei z.B. anhand eines Models der zu verwendenden Läppvorrichtung 10 die Einstellwerte dieser Vorrichtung 10 ermittelt werden) oder die Maschinenkinematik kann in Form eines zusätzlichen (separaten) Datensatzes bereitgestellt werden.

Diese Vorgabedaten VD können zum Beispiel an einen Prozess übergeben werden. Der Prozess, der z.B. als Software oder Softwaremodul realisiert sein kann, kann in einem solchen Fall die Vorgabedaten VD in Maschinendaten MD übersetzen (teilweise auch Maschinencode oder Prozessdaten genannt), die von der NC-Steuerung der Maschine 10 in koordinierte Bewegungsabläufe umgesetzt werden.

Die Maschine 10 läppt nun die beiden Räder T1, R1, wie z.B. anhand der Maschinendaten MD für die erste Läpp-Prozedur vorgegeben. Nachdem diese Läppbearbeitung abgeschlossen wurde, werden die beiden Räder T1, R1 (direkt oder indirekt) an die Messvorrichtung 20 übergeben (wie durch den Pfeil 15 angedeutet). In der Messvorrichtung 20 wird ein vordefinierter Messablauf durchgeführt und es werden im Rahmen dieses Messablaufs relative Achsbewegungen der NC-Achsen der Messvorrichtung 20 durchgeführt, um Messwerte MW zu erhalten, die zum Ermitteln des Ist-Ease-Off geeignet sind. Das Ermitteln des Ist-Ease-Off kann z.B. direkt in der Messeinrichtung 20 oder z.B. durch eine Software oder ein Software-Modul SW2 erfolgen.

In Fig. 3A ist eine Ausführungsform gezeigt, bei der alle Funktionalitäten in der Software SW implementiert sind. Die Software SW kann z.B. eingesetzt werden, um aus den Messwerten MW, die von der Messvorrichtung 20 geliefert werden, den Ist-Ease-Off zu ermitteln. Aus dem Ist-Ease-Off und dem Soll-Ease-Off, der in den Vorgabedaten VD enthalten ist, kann die Software SW Korrekturwerte oder Kompensationswerte ΔMD berechnen. In einem optionalen Zwischenschritt können Abweichungen ΔVD berechnet und zur Verfügung gestellt werden.

Fig. 3B zeigt eine Ausführungsform, bei der die Software SW mit zwei Software-Modulen SW1 und SW2 verknüpft ist. Das Software-Modul SW2, falls vorhanden, kann z.B. eingesetzt werden, um aus den Messwerten MW, die von der Messvorrichtung 20 geliefert werden, den Ist-Ease-Off zu ermitteln. Die Software SW kann den Ist-Ease-Off mit dem Soll-Ease-Off vergleichen, der in den Vorgabedaten VD enthalten ist. Das Software-Modul SW1, falls vorhanden, kann z.B. eingesetzt werden, um aus dem Ergebnis des Vergleichs, der von der Software SW durchgeführt wurde, Korrekturwerte oder Kompensationswerte ΔMD zu berechnen. In einem optionalen Zwischenschritt können Abweichungen ΔVD berechnet und zur Verfügung gestellt werden.

Die schematischen Darstellungen der Figuren 3A und 3B sind als Beispiele zu verstehen. Es gibt auch andere Möglichkeiten die Datenübergabe und die Berechnungs- sowie Umrechnungsschritte zu organisieren.

Es kann z.B. der Optimierungsalgorithmus der Software KOMET^{™} der Firma Klingelnberg GmbH, Deutschland, eingesetzt werden, um die Messwerte MW, die mittels der Messeinrichtung 20 ermittelt wurden, in Korrekturen (z.B. in Form von Korrekturwerten oder Kompensationswerten ΔMD) der nachfolgend auszuführenden Läpp-Prozedur umzurechnen.

Im Idealfall ist der Ist-Ease-Off der beiden Räder T1, R1 absolut identisch mit dem Soll-Ease-Off, d.h. die Istdaten ID entsprechen den Vorgabedaten VD. In diesem Fall, der von rein theoretischer Bedeutung ist, können die Maschinendaten MD z.B. gespeichert werden, um weitere baugleiche Zahnradpaare (z.B. in Serie) zu läppen.

In der Praxis werden jedoch beim Messen Abweichungen (hier mit ΔVD bezeichnet) zwischen den Istdaten ID und den Vorgabedaten VD, respektive zwischen dem Soll-Ease-Off und dem Ist-Ease-Off, ermittelt.

Bei mindestens einem Teil der Ausführungsformen können diese Abweichungen ΔVD beispielsweise von der Messeinrichtung 20 direkt oder indirekt an die Software SW und/oder an die NC-Steuerung der Maschine 10 geliefert werden.

Je nach Ausführungsform kann nun z.B. die Software SW und/oder die NC-Steuerung Korrekturwerte ΔMD für die Steuerung der Maschine 10 ermitteln und an die Maschine 10 übermitteln. Es ist aber auch möglich, dass die Software SW und/oder die NC-Steuerung die Abweichungen ΔVD und/oder die Korrekturwerte ΔMD aus Messwerten ermittelt, die von der Messeinrichtung 20 bereitgestellt werden.

Die Korrekturwerte ΔMD werden entweder beim erneuten Läppen des ersten Zahnradpaares oder beim Läppen des nachfolgenden Zahnradpaares berücksichtigt. Die Korrekturwerte ΔMD können z.B. mit den Maschinendaten MD der ersten Läpp-Prozedur verknüpft werden, um die Ablaufsteuerung der nachfolgenden Läpp-Prozedur anzupassen. Oder es werden anhand der Korrekturwerte ΔMD neue Maschinendaten MD für die Ablaufsteuerung der nachfolgenden Läpp-Prozedur berechnet.

Die erwähnten Abweichungen ΔVD werden vorzugsweise bei allen Ausführungsformen dazu eingesetzt, um die geometrischen Einstellwerte und/oder die Bewegungen der Maschine 10 anzupassen.

Der beschriebene closed-loop Ansatz, aber auch andere, ähnlich geartete vernetzte Lösungen, ermöglichen eine fortschreitende Optimierung des Ease-Off beim Läppen von baugleichen Zahnradpaaren.

Die Software SW und/oder SW1 und/oder SW2 kann bei allen Ausführungsformen mindestens eine (Hardware und/oder Software) Schnittstelle umfasst, die zur Datenkommunikation mit der Maschine 10 und/oder mit der Messvorrichtung 20 ausgelegt ist.

Die Software SW und/oder SW1 und/oder SW2 kann bei allen Ausführungsformen dazu ausgelegt sein, um aus den Messwerten MW, die den Ist-Ease-Off umschreiben, und aus Werten (z.B. aus den entsprechenden Vorgabedaten VD), die den Soll-Ease-Off umschreiben, die Korrekturwerte ΔMD zu berechnen.

Diese Korrekturwerte ΔMD können bei allen Ausführungsformen direkt aus den Messwerten MW des Ist-Ease-Off und Werten (z.B. aus den entsprechenden Vorgabedaten VD) des Soll-Ease-Off berechnet werden, oder es werden aus den Messwerten MW und den Werten (z.B. aus den entsprechenden Vorgabedaten VD) erst Abweichungen ΔVD berechnet. Im letzteren Fall erfolgt dann die Berechnung der Korrekturwerte ΔMD aus den Abweichungen ΔVD.

Das vernetzte Bearbeitungsumfeld (hier als Closed-Loop Vorrichtung 100 bezeichnet) ist bei mindestens einem Teil der Ausführungsformen dazu ausgelegt das folgende Verfahren durchzuführen. Dabei werden die folgenden Schritte ausgeführt.

Vorgeben oder Bereitstellen (Schritt S1) eines Soll-Ease-Off für eine Paarung von zwei Zahnrädern eines ersten Zahnradpaares T1, R1 aus einer Anzahl n von baugleichen Zahnradpaaren Tn, Rn, wobei n eine ganze Zahl größer gleich 1 ist.

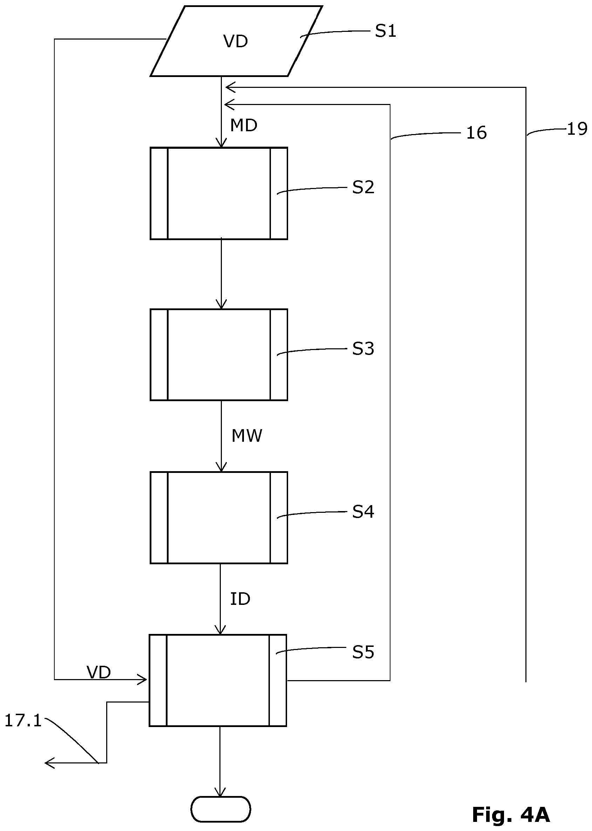

Der Soll-Ease-Off kann beispielsweise, wie in Fig. 4A angedeutet, in Form von Vorgabedaten VD bereitgestellt werden. Das Vorgeben oder Bereitstellen (Schritt S1) des Soll-Ease-Off, respektive der entsprechenden Vorgabedaten VD, kann bei allen Ausführungsformen z.B.
- im Rahmen eines softwaregestützten Auslegungsverfahrens berechnet/festgelegt werden, wie bereits beschrieben wurde, oder
- es können nach dem Härten eines bereits verzahnten Zahnradpaares eine Messung der Ist-Geometrie/Ist-Topografie der beiden Zahnräder des Zahnradpaares vorgenommen werden, um dann anhand der Ist-Geometrie/Ist-Topografie einen Soll-Ease-Off festzulegen, oder
- es kann der Soll-Ease-Off z.B. aus einem Speicher geladen werden, oder
   der Soll-Ease-Off wird festlegt/definiert, indem anhand einer Rückwärtssimulation der Einfluss des Läppens ermittelt wird. Durch die Rückwärtssimulation des Läppens kann die Geometrie/Topografie der beiden Zahnräder nach dem Härten (d.h. vor dem Läppen) ermittelt werden. Außerdem kann ermittelt werden, wie die Geometrie/Topografie der beiden Zahnräder nach dem Verzahnen (z.B. mittels Fräsen) aussehen muß. Wenn die Geometrie/Topografie nach dem Verzahnen und/oder die Geometrie/Topografie nach dem Härten bekannt ist/sind, kann für ein Zahnradpaar ein geeigneter Soll-Ease-Off festlegt/definiert werden.

Dann folgt das Durchführen einer ersten Läpp-Prozedur (Schritt S2) an den beiden Zahnrädern des ersten Zahnradpaares T1, R1. Die einzelnen NC-gesteuerten Bewegungen der Achsen der Maschine 10 werden im Rahmen der ersten Läpp-Prozedur so vorgenommen, wie anhand eines Ablaufs oder eines Ablaufprogramms festgelegt. Hier kann z.B. die Software SW mit der NC-Steuerung des Maschine 10 zusammen wirken, wobei die Software SW der NC-Steuerung Maschinendaten MD übergibt, wie in Fig. 4A schematisch angedeutet.

Vor dem Durchführen der ersten Läpp-Prozedur (Schritt S2) können bei allen Ausführungsformen optional die folgenden vorbereitenden Schritte durchgeführt werden:
- Einspannen eines ersten Zahnrades T1 eines Zahnradpaares T1, R1 in einer Läppvorrichtung 10, so dass das erste Zahnrad T1 um eine erste Rotationsachse TA der Läppvorrichtung 10 drehbar ist,
- Einspannen eines zweiten Zahnrades R1 des Zahnradpaares T1, R1 in der Läppvorrichtung 10, so dass das zweite Zahnrad R2 um eine zweite Rotationsachse RA der Läppvorrichtung 10 drehbar ist,
- Ausführen relativer Bewegungen mittels der Läppvorrichtung 10, um das erste Zahnrad T1 mit dem zweiten Zahnrad R1 in Eingriff zu bringen,
- Einbringen eines Läppmittels in die Läppvorrichtung 10.

Nach dem Schritt S2 werden die beiden Räder des ersten Zahnradpaares T1, R1 einer Meß-Prozedur unterzogen. Das Durchführen der Meß-Prozedur (Schritt S3) wird vorgenommen, um an Zahnflanken beider Zahnräder mehrere Messwerte MW zu erfassen. Das Durchführen der Meß-Prozedur (Schritt S3) kann in der Maschine 10 oder in einer Messvorrichtung 20 vorgenommen werden. Beim Durchführen des Schrittes S3 innerhalb der Maschine 10, müssen die Räder T1, R1 nicht umgespannt werden. Beim Durchführen des Schrittes S3 in einer separaten Messvorrichtung 20, müssen die Räder T1, R1 zuvor an die Messvorrichtung 20 übergeben werden, wie in Fig. 2 durch den Pfeil 15 symbolisiert.

Nun folgt das Ermitteln (Schritt S4) des Ist-Ease-Off des ersten Zahnradpaares T1, R1 aus den Messwerten MW. Das Ermitteln des Ist-Ease-Off kann bei allen Ausführungsformen rechnerisch und/oder analytisch erfolgen. Vorzugsweise kommt bei allen Ausführungsformen eine Software SW und/oder SW2 zum Einsatz, die es ermöglicht den Ist-Ease-Off anhand von Messwerten MW zu ermitteln, die nach dem Läppen an dem ersten Zahnradpaar T1, R1 gemessen wurden.

Der Schritt S4 kann an verschiedenen Stellen der Gesamtvorrichtung 100 durchgeführt werden, wie bereits zuvor anhand verschiedener Ausführungsformen beschrieben wurde. Der Ist-Ease-Off kann bei allen Ausführungsformen z.B. in Form von Istdaten ID beschrieben werden.

Nun folgt das Vergleichen (Schritt S5) des Ist-Ease-Off mit dem Soll-Ease-Off. Der Vergleich dient dazu Abweichungen zwischen dem Ist-Ease-Off und dem Soll-Ease-Off zu ermitteln. Das Ermitteln der Abweichungen kann bei allen Ausführungsformen rechnerisch und/oder analytisch erfolgen. Vorzugsweise kommt bei allen Ausführungsformen eine Software zum Einsatz, die es ermöglicht die Abweichungen zu berechnen.

Falls der Ist-Ease-Off bereits in einem Toleranzfenster liegen sollte, das z.B. als Soll-Ease-Off ± Toleranzwert definiert ist, kann das iterative Verfahren abgebrochen werden und es kann das nächste Zahnradpaar T2, R2 der Menge an baugleichen Zahnradpaaren Tn, Rn den Schritten S2 bis S5 unterzogen werden. In Fig. 4A ist dieses Rückverzweigen des Verfahrens durch einen Pfad 16 symbolisiert. In diesem Sonderfall kann bereits zum Ende des Schrittes S5 das erste Zahnradpaar T1, R1 ausgegeben werden, wie in Fig. 4A schematisch durch den Pfad 17.1 dargestellt. Dieser Sonderfall für sich genommen, wonach für ein Zahnradpaar nicht die Schritte S6, S7, S8 (S2*) bzw. nicht die Schritte f), g), h) und i) des Anspruchs 1 ausgeführt werden, ist keine Ausführung des Verfahrens gemäß Anspruch 1.

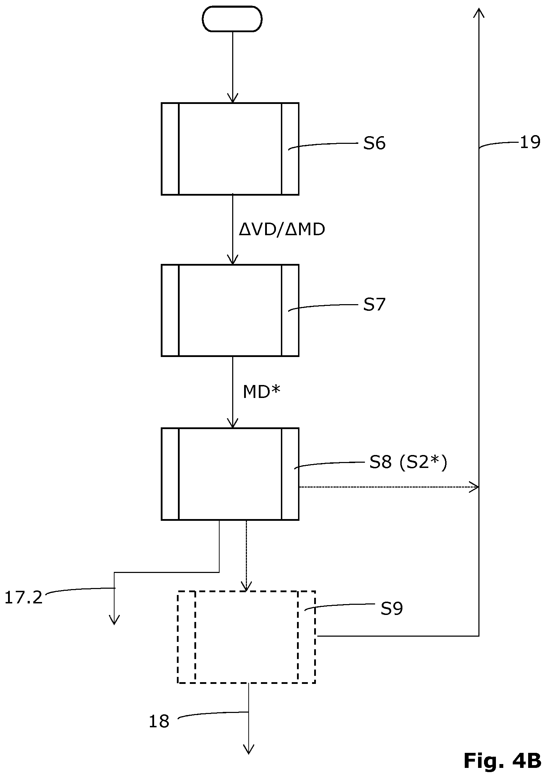

Falls der Ist-Ease-Off jedoch außerhalb des Toleranzfensters liegt, werden die nachfolgend beschriebenen Schritte ausgeführt. Diese nachfolgenden Schritte sind in Fig. 4B gezeigt.

Es folgt das Ermitteln von Korrekturwerten (Schritt S6). Im Rahmen dieser Ermittlung können die Korrekturwerte in Form von Änderungen bzw. Anpassungen der Vorgabedaten VD ausgedrückt werden. Das Ermitteln der Korrekturwerte kann bei allen Ausführungsformen rechnerisch und/oder analytisch erfolgen. Vorzugsweise kommt bei allen Ausführungsformen eine Software zum Einsatz, die einen Optimierungsalgorithmus umfasst.

Die Korrekturwerte werden hier als ΔVD bezeichnet. Im Rahmen dieser Ermittlung können die Korrekturwerte ΔVD in Form von Änderungen bzw. Anpassungen der Maschinendaten MD ausgedrückt werden. In diesem Fall werden die Korrekturwerte als ΔMD bezeichnet.

Im nachfolgenden Schritt S7 wird nun eine zweite (angepasste) Läpp-Prozedur anhand der Korrekturwerte ΔVD oder ΔMD definiert.

In Fig. 4B ist das Durchführen der zweite (angepasste) Läpp-Prozedur auch mit dem Bezugszeichen S2* versehen, um auszudrücken, dass die zweite (angepasste) Läpp-Prozedur bei allen Ausführungsformen z.B. durch das Anpassen der ersten Läpp-Prozedur (Schritt S2) definiert oder von dieser abgeleitet werden kann.

Zum Zwecke des Durchführens der zweiten Läpp-Prozedur (Schritt S8) können beispielsweise anhand der Korrekturwerte ΔVD oder ΔMD Maschinendaten MD* ermittelt und an die Maschine 10 übergeben werden.

Falls der Ist-Ease-Off des ersten Zahnradpaares T1, R1 noch nicht in dem Toleranzfenster liegt (was im Rahmen des Vergleichens im Schritt S5 ermittelt wurde), das z.B. als Soll-Ease-Off ± Toleranzwert definiert ist, kann das erste Zahnradpaar T1, R1 einer erneuten, angepassten Läpp-Prozedur unterzogen werden (Schritt S8 in Fig. 4B). Für diese erneute, angepasste Läpp-Prozedur kommen Maschinendaten MD* zum Einsatz, die angepasst/korrigiert wurden.

Das Durchführen einer erneuten, angepassten Läpp-Prozedur am ersten Zahnradpaar T1, R1 ist jedoch nur dann sinnvoll, wenn die beiden Räder T1, R1 nach der ersten Läpp-Prozedur ein ausreichend großes Aufmass haben.

Falls das erste Zahnradpaar T1, R1 keiner weiteren, angepassten Läpp-Prozedur unterzogen wird, so werden nun die Räder eines zweiten Zahnradpaares T2, R2 in die Maschine eingebracht.

Vor dem Durchführen der angepassten Läpp-Prozedur (Schritt S8) am zweiten Zahnradpaar T2, R2, können bei allen Ausführungsformen diejenigen vorbereitenden Schritte für die beiden Räder T2, R2 durchgeführt werden, die bereits anhand des ersten Zahnradpaar T1, R1 im Zusammenhang mit dem Schritt S2 beschrieben wurden.

Zum Ende des Schrittes S8 kann das jeweilige Zahnradpaar (z.B. das zweifach geläppte erste Zahnradpaar T1, R1 oder das einmal geläppte zweite Zahnradpaar T2, R2) ausgegeben werden, wie in Fig. 4B schematisch durch den Pfad 17.2 dargestellt.

Optional kann in einem nachgelagerten Schritt S9 erneut eine Messung vorgenommen werden, um Messwerte zu erfassen, die das Berechnen und Überprüfen des Ist-Ease-Off z.B. des zweiten Zahnradpaares T2, R2 ermöglichen. Es kann hier die Meß-Prozedur zum Einsatz kommen, die bereits als Schritt S3 beschrieben wurde. Dieser optionale Schritt S9 kann stets ausgeführt werden, um zu ermitteln, ob der Ist-Ease-Off nun im Toleranzfenster des Soll-Ease-Off liegt. Es ist aber auch möglich den Schritt S9 nur von Zeit zu Zeit (z.B. bei jeden 10. Zahnradpaar) durchzuführen. Falls der Ist-Ease-Off im Toleranzfenster liegt, so kann das zweite Zahnradpaar T2, R2 ausgegeben werden, wie in Fig. 4B schematisch durch den Pfad 18 dargestellt.

Falls das Verfahren nicht bereits beim Läppen des ersten Zahnradpaares T1, R1 oder des zweiten Zahnradpaares T2, R2 konvergieren sollte, können optional die Schritte für ein weiteres Zahnradpaar Tn, Rn wiederholt werden. In den Figuren 4A, 4B ist dieses erneute Rückverzweigen des Verfahrens durch einen Pfad 19 symbolisiert. Das Rückverzweigen des Verfahrens kann auch am Schritt S8 ansetzen, wie in Fig. 4B angedeutet.

Um das Läppen im Rahmen des Verfahrens zielgerichtet ausführen zu können, kann bei allen Ausführungsformen das Abtragsverhalten der Läppvorrichtung 10 beim Läppen berücksichtigt werden. Das Abtragsverhalten kann z.B. anhand vorausgehender Läppversuche an baugleichen Zahnradpaaren empirisch ermittelt und abgespeichert werden. Das Abtragsverhalten kann z.B. durch Simulation ermittelt und abgespeichert werden.

Vorzugsweise wird/werden beim Ermitteln des Abtragsverhaltens für eine Vielzahl von Punkten auf den Zahnflanken von Tellerrad Tn und Ritzel Rn das momentane Lastmoment und/oder die Drehzahl und/oder die Haltezeit (falls die Läpp-Prozedur ein Halten der Relativbewegungen an dem entsprechenden Punkt vorsieht) erfasst. Außerdem werden z.B. die Koordinaten der entsprechenden Punkte im 3-dimensionalen Raum erfasst. Pro Punkt können somit z.B. eine Reihe von Parametern und/oder Werten erfasst und abgespeichert werden. Pro Punkt können Abtragsgrössen z.B. in Form von Läpp-Koeffizienten αL erfasst und abgespeichert werden.

Es ist beim Ermitteln des Abtragsverhaltens auch möglich die relativen Verfahrwege (die durch das relative Verlagern von Tellerrad Tn und Ritzel Rn in der Maschine 10 abgefahren werden) von Punkt zu Punkt sowie eine oder mehrere der für das Läppen verfahrensrelevanten Parameter oder Werte zu erfassen.

Der Abtragskoeffizienten αL, der optional für eine Vielzahl von Punkten ermittelt wird, ermöglicht eine Aussage über den lokalen Läppabtrag an jedem der einzelnen Punkte zu machen. Außerdem kann anhand einer Menge an Abtragskoeffizienten αL auch eine Aussage über die Läppabtrag-Verteilung auf den Flanken der Räder Tn, Rn gemacht werden. Anhand der Abtragskoeffizienten αL kann das Läppen durch die NC-Steuerung der Vorrichtung 10 gezielt gesteuert werden.

### Bezugszeichen

| | |
|---|---|
| Läppvorrichtung / Läppmaschine | 10 |
| erste Spindel | 11 |
| zweite Spindel | 12 |
| Maschinengehäuse | 13 |
| kommunikationstechnische Verbindung / Netzwerk / Bus / kabellose Verbindung | 14 |
| Übergabe | 15 |
| Pfad | 16, 17.1, 17.2, 18, 19 |
| Meßvorrichtung / Messgerät / Koordinatenmessvorrichtung | 20 |
| Schaltschrank | 40 |
| | |
| Closed Loop-Vorrichtung / Gesamtvorrichtung | 100 |
| | |
| Abtragskoeffizient / Läpp-Koeffizient | oL |
| Abweichungen | ΔVD |
| Korrekturwerte / Kompensationswerte | ΔMD |
| Istdaten | ID |
| Ritzel | R, Rn |
| Ritzel | R1, R2 |
| Zweite Rotationsachse / Ritzelachse | RA |
| erste Linearachse (G-Achse) | LA 1 |
| zweite Linearachse (H-Achse) | LA2 |
| dritte Linearachse (V-Achse) | LA3 |
| Maschinendaten | MD, MD* |
| Messwerte | MW |
| Anzahl / Zahl | n |
| NC-Steuerung | NC |
| Schritte | S1, S2, S2*, S3, S4, S5, S6, S7, S8, S9 |
| Schnittstelle | SN |
| Software / Software-Modul | SW, SW1, SW2 |
| Tellerrad | T, Tn |
| Tellerrad | T1, T2 |
| Erste Rotationsachse / Tellerradachse | TA |
| Vorgabedaten | VD |
| Zähnezahl | Z1, Z2 |

## Patentansprüche

1. Läppverfahren mit den folgenden Schritten:
a) Vorgeben (S1) eines Soll-Ease-Off für eine Paarung von zwei Zahnrädern eines ersten Zahnradpaares (T1, R1) aus einer Anzahl (n) von baugleichen Zahnradpaaren (Tn, Rn),
b) Durchführen (S2) einer ersten Läpp-Prozedur an den beiden Zahnrädern des ersten Zahnradpaares (T1, R1),
c) Durchführen (S3) einer Meß-Prozedur an den beiden Zahnrädern des ersten Zahnradpaares (T1, R1), um an Zahnflanken beider Zahnräder mehrere Messwerte (MW) zu erfassen,
d) Ermitteln (S4) des Ist-Ease-Off des ersten Zahnradpaares (T1, R1) aus den Messwerten (MW),
e) Ermitteln (S5) von Abweichungen des Ist-Ease-Off gegenüber dem Soll-Ease-Off,
f) Ermitteln (S6) von Korrekturwerten (ΔVD; ΔMD) anhand der Abweichungen,
g) Definieren (S7) einer angepassten Läpp-Prozedur anhand der Korrekturwerte (ΔVD; ΔMD),
und
h) Entweder Durchführen einer weiteren, angepassten Läpp-Prozedur (S8, S2*) an den beiden Zahnrädern des ersten Zahnradpaares (T1, R1),
i) oder Durchführen einer angepassten Läpp-Prozedur (S8, S2*) an den beiden Zahnrädern eines zweiten Zahnradpaares (T2, R2) aus der Anzahl (n) von baugleichen Zahnradpaaren (Tn, Rn).

2. Verfahren nach Anspruch 1, **dadurch gekennzeichnet, dass** der Schritt h) nur dann an dem ersten Zahnradpaar (T1, R1) durchgeführt wird, falls dieses erste Zahnradpaar (T1, R1) nach dem Durchführen (S2) der ersten Läpp-Prozedur ein ausreichend großes Aufmass hat.

3. Verfahren nach Anspruch 2, **dadurch gekennzeichnet, dass** nach dem Schritt h) das erste Zahnradpaar (T1, R1) ausgegeben wird.

4. Verfahren nach Anspruch 1, **dadurch gekennzeichnet, dass** nach dem Schritt i) an dem zweite Zahnradpaar (T2, R2) eine Meß-Prozedur gemäß den Vorgaben des Schrittes c) und das Ermitteln des Ist-Ease-Off gemäß den Vorgaben des Schrittes d) durchgeführt werden, um zu ermitteln, ob das zweite Zahnradpaar (T2, R2) innerhalb eines Toleranzfensters des Soll-Ease-Off liegt, wobei das zweite Zahnradpaar (T2, R2) ausgegeben wird, falls der Ist-Ease-Off innerhalb des Toleranzfensters liegt.

5. Verfahren nach Anspruch 3, **dadurch gekennzeichnet, dass** die Schritte b) bis i) für weitere Zahnradpaare (Tn, Rn) durchgeführt werden.

6. Verfahren nach einem der Ansprüche 1 bis 5, **dadurch gekennzeichnet, dass** der Soll-Ease-Off und der Ist-Ease-Off die Eingriffsverhältnisse der beiden Zahnräder eines Zahnradpaares (Tn, Rn) beschreibt, wenn sich diese miteinander gepaart im Eingriff befinden.

7. Verfahren nach einem der Ansprüche 1 bis 6, **dadurch gekennzeichnet, dass** der Ease-Off als eine Menge mit einer Vielzahl von diskreten Ease-Off-Werten oder als eine Ease-Off-Funktion definiert ist.

8. Verfahren nach einem der Ansprüche 1 bis 7, **dadurch gekennzeichnet, dass** der Soll-Ease-Off in einem vorbereitenden Schritt anhand einer Simulation, vorzugsweise anhand einer Rückwärtssimulation, oder anhand eines Berechnungsverfahrens ermittelt wird, wobei Abtragsgrössen, insbesondere Läpp-Koeffizienten (αL), zum Einsatz kommen, die für eine Vielzahl von Punkten der Zahnflanken beider Zahnräder des Zahnradpaares (Tn, Rn) zur Verfügung stehen.

9. Verfahren nach einem der Ansprüche 1 bis 8, **dadurch gekennzeichnet, dass** vor dem Schritt b) und/oder vor dem Schritt i) die folgenden vorbereitenden Schritte durchgeführt werden:
- Einspannen eines ersten Zahnrades (Tn) eines Zahnradpaares (Tn, Rn) in einer Läppvorrichtung (10), so dass das erste Zahnrad (Tn) um eine erste Rotationsachse (TA) der Läppvorrichtung (10) drehbar ist,
- Einspannen eines zweiten Zahnrades (Rn) des Zahnradpaares (Tn, Rn) in der Läppvorrichtung (10), so dass das zweite Zahnrad (Rn) um eine zweite Rotationsachse (RA) der Läppvorrichtung (10) drehbar ist,
- Ausführen relativer Bewegungen mittels der Läppvorrichtung (10), um das erste Zahnrad (Tn) mit dem zweiten Zahnrad (Rn) in Eingriff zu bringen.

10. Verfahren nach Anspruch 9, **dadurch gekennzeichnet, dass** während der ersten Läpp-Prozedur und während der zweiten Läpp-Prozedur, die in der Läppvorrichtung (10) durchgeführt werden, ein Läppmittel so eingebracht wird, dass in einem Eingriffsbereich beider Zahnräder (Tn, Rn) Abrasivpartikel des Läppmittels für einen Materialabtrag an den beiden Zahnrädern (Tn, Rn) sorgen.

11. Gesamtvorrichtung (100) mit einer Läppvorrichtung (10) und einer Messvorrichtung (20), wobei
- die Läppvorrichtung (10) mehrere NC-gesteuerte Achsen (LA1, LA2, LA3, RA, TA) sowie eine NC-Steuerung (NC) umfasst,
- die Läppvorrichtung (10) dazu ausgelegt ist eine erste Läpp-Prozedur (S2) an zwei Zahnrädern eines ersten Zahnradpaares (T1, R1) durchzuführen, und
- die Messvorrichtung (20) dazu ausgelegt ist eine Meß-Prozedur (S3) an den beiden Zahnrädern des ersten Zahnradpaares (T1, R1) durchzuführen, um an Zahnflanken beider Zahnräder mehrere Messwerte (MW) zu erfassen,
- **dadurch gekennzeichnet, dass** die Gesamtvorrichtung (10) dazu ausgelegt ist
• einen Ist-Ease-Off des ersten Zahnradpaares (T1, R1) aus den Messwerten (MW) zu ermitteln,
• Abweichungen des Ist-Ease-Off gegenüber dem Soll-Ease-Off zu ermitteln,
• Korrekturwerte (ΔVD; ΔMD) anhand der Abweichungen zu ermitteln, und
• eine angepasste zweite Läpp-Prozedur (S8, S2*) zu definieren,
und wobei die Läppvorrichtung (10) dazu ausgelegt ist die angepasste zweite Läpp-Prozedur (S8, S2*) an den beiden Zahnrädern des ersten Zahnradpaares (T1, R1) und/oder an zwei Zahnrädern eines zweiten Zahnradpaares (T2, R2) durchzuführen.

12. Gesamtvorrichtung (100) nach Anspruch 11, **dadurch gekennzeichnet, dass** die Läpp-Prozeduren (S2, S8) mittels Abtragsgrössen, insbesondere mittels Läpp-Koeffizienten (αL), definierbar sind, die für eine Vielzahl von Punkten der Zahnflanken beider Zahnräder des jeweiligen Zahnradpaares (Tn, Rn) zur Verfügung stehen.

13. Gesamtvorrichtung (100) nach Anspruch 12, **dadurch gekennzeichnet, dass** diese eine Datenschnittstelle oder eine Nutzerschnittstelle (SN) umfasst, die es ermöglicht die Abtragsgrössen, insbesondere die Läpp-Koeffizienten (αL), zu definieren.

14. Gesamtvorrichtung (100) nach einem der Ansprüche 11 bis 13, **dadurch gekennzeichnet, dass** die Läppvorrichtung (10) und die Messvorrichtung (20) kommunikationstechnisch gekoppelt sind.

15. Gesamtvorrichtung (100) nach einem der Ansprüche 11 bis 14, **dadurch gekennzeichnet, dass** die Läppvorrichtung (10) und die Messvorrichtung (20) so integriert ausgeführt sind, dass zwischen dem Läppen der beiden Zahnräder eines Zahnradpaares (Tn, Rn) und dem Durchführen einer Meß-Prozedur (S3) an den beiden Zahnrädern des Zahnradpaares (Tn, Rn) kein Umspannen der beiden Zahnräder erforderlich ist.

16. Gesamtvorrichtung (100) nach einem der Ansprüche 11 bis 15, **dadurch gekennzeichnet, dass** diese mindestens eine Software oder mindestens ein Software-Modul (SW, SW1, SW2) umfasst, wobei diese Software oder dieses Software-Modul (SW, SW1, SW2) dazu ausgelegt ist Abweichungen zwischen einem Ist-Ease-Off und einem Soll-Ease-Off zu ermitteln und Anpassungen an der ersten Läpp-Prozedur (S2) vorzunehmen, um daraus die angepasste zweite Läpp-Prozedur (S8, S2*) zu definieren.

## Claims

1. A lapping method comprising the following steps:
a) specifying (S1) a target ease-off for a pair of two gear wheels of a first gear wheel pair (T1, R1) from a number (n) of structurally-equivalent gear wheel pairs (Tn, Rn),
b) carrying out (S2) a first lapping procedure on the two gear wheels of the first gear wheel pair (T1, R1),
c) carrying out (S3) a measurement procedure on the two gear wheels of the first gear wheel pair (T1, R1), to acquire multiple measured values (MW) on tooth flanks of both gear wheels,
d) ascertaining (S4) the actual ease-off of the first gear wheel pair (T1, R1) from the measured values (MW),
e) ascertaining (S5) deviations of the actual ease-off in relation to the target ease-off,
f) ascertaining (S6) correction values (ΔVD; ΔMD) on the basis of the deviations,
g) defining (S7) an adapted lapping procedure on the basis of the correction values (ΔVD; ΔMD),
and
h) either carrying out a further, adapted lapping procedure (S8, S2*) on the two gear wheels of the first gear wheel pair (T1, R1),
i) or carrying out an adapted lapping procedure (S8, S2*) on the two gear wheels of a second gear wheel pair (T2, R2) from the number (n) of structurally-equivalent gear wheel pairs (Tn, Rn).

2. The method according to Claim 1, **characterized in that** step h) is only carried out on the first gear wheel pair (T1, R1) if this first gear wheel pair (T1, R1) has a sufficiently large oversize after carrying out (S2) the first lapping procedure.

3. The method according to Claim 2, **characterized in that** the first gear wheel pair (T1, R1) is output after step h).

4. The method according to Claim 1, **characterized in that**, after step i), a measuring procedure according to the specifications of step c) and the ascertainment of the actual ease-off according to the specifications of the step d) are carried out on the second gear wheel pair (T2, R2), to ascertain whether the second gear wheel pair (T2, R2) is within a tolerance window of the target ease-off, wherein the second gear wheel pair (T2, R2) is output if the actual ease-off is within the tolerance window.

5. The method according to Claim 3, **characterized in that** steps b) to i) are carried out for further gear wheel pairs (Tn, Rn).

6. The method as claimed in any one of Claims 1 to 5, **characterized in that** the target ease-off and the actual ease-off describe the engagement behaviors of the two gear wheels of a gear wheel pair (Tn, Rn) when they are engaged while paired with one another.

7. The method as claimed in any one of Claims 1 to 6, **characterized in that** the ease-off is defined as a set having a plurality of discrete ease-off values or as an ease-off function.

8. The method as claimed in any one of claims 1 to 7, **characterized in that** the target ease-off is ascertained in a preparatory step on the basis of a simulation, preferably on the basis of a reverse simulation, or on the basis of a computation method, wherein removal variables, in particular lapping coefficients (αL), are used which are available for a plurality of points of the tooth flanks of both gear wheels of the gear wheel pair (Tn, Rn).

9. The method according to any one of Claims 1 to 8, **characterized in that** the following preparatory steps are carried out before step b) and/or before step i):
- chucking a first gear wheel (Tn) of a gear wheel pair (Tn, Rn) in a lapping device (10), so that the first gear wheel (Tn) is rotatable around a first rotational axis (TA) of the lapping device (10),
- chucking a second gear wheel (Rn) of the gear wheel pair (Tn, Rn) in the lapping device (10), so that the second gear wheel (Rn) is rotatable around a second rotational axis (RA) of the lapping device (10),
- executing relative movements by means of the lapping device (10) to engage the first gear wheel (Tn) with the second gear wheel (Rn).

10. The method according to Claim 9, **characterized in that**, during the first lapping procedure and during the second lapping procedure, which are carried out in the lapping device (10), a lapping agent is introduced in such a way that in an engagement region of both gear wheels (Tn, Rn), abrasive particles of the lapping agent ensure a material removal on the two gear wheels (Tn, Rn).

11. Overall device (100) comprising a lapping device (10) and a measuring device (20), wherein
- the lapping device (10) comprises multiple NC-controlled axes (LA1, LA2, LA3, RA, TA) and an NC controller (NC),
- the lapping device (10) is designed to carry out a first lapping procedure (S2) on two gear wheels of a first gear wheel pair (T1, R1),
- the measuring device (20) is designed to carry out a measurement procedure (S3) on the two gear wheels of the first gear wheel pair (T1, R1), in order to acquire multiple measured values (MW) on tooth flanks of both gear wheels, **characterized in that**,
- the overall device (10) is designed
• to ascertain an actual ease-off of the first gear wheel pair (T1, R1) from the measured values (MW),
• to ascertain deviations of the actual ease-off in relation to the target ease-off,
• to ascertain correction values (ΔVD; ΔMD) on the basis of the deviations, and
• to define an adapted second lapping procedure (S8, S2*),
and wherein the lapping device (10) is designed to carry out the adapted second lapping procedure (S8, S2*) on the two gear wheels of the first gear wheel pair (T1, R1) and/or on two gear wheels of a second gear wheel pair (T2, R2).

12. The overall device (100) according to Claim 11, **characterized in that** the lapping procedures (S2, S8) are definable by means of removal variables, in particular by means of lapping coefficients (αL), which are available for a plurality of points of the tooth flanks of both gear wheels of the respective gear wheel pair (Tn, Rn).

13. The overall device (100) according to Claim 12, **characterized in that** it comprises a data interface or user interface (SN), which enable it to define the removal variables, in particular the lapping coefficients (αL).

14. The overall device (100) according to any one of Claims 11 to 13, **characterized in that** the lapping device (10) and the measuring device (20) are coupled in a communicating manner.

15. The overall device (100) according to any one of Claims 11 to 14, **characterized in that** the lapping device (10) and the measuring device (20) are embodied integrated in such a way that re-chucking the two gear wheels is not required between the lapping of the two gear wheels of a gear wheel pair (Tn, Rn) and carrying out a measurement procedure (S3) on the two gear wheels of the gear wheel pair (Tn, Rn).

16. The overall device (100) according to any one of Claims 11 to 15, **characterized in that** it comprises at least one software or at least one software module (SW, SW1, SW2), wherein this software or the software module (SW, SW1, SW2) is designed to ascertain deviations between an actual ease-off and a target ease-off and to perform adaptations to the first lapping procedure (S2) to define the adapted second lapping procedure (S8, S2*) therefrom.

## Revendications

1. Procédé de rodage par poudre abrasive, comportant les étapes suivantes :
a) spécification (S1) d'un enlèvement théorique pour un appariement de deux roues dentées d'une première paire de roues dentées (T1, R1) d'une pluralité (n) de paires de roues dentées (Tn, Rn) de construction identique,
b) réalisation (S2) d'une première procédure de rodage au niveau des deux roues dentées de la première paire de roues dentées (T1, R1),
c) réalisation (S3) d'une procédure de mesure au niveau des deux roues dentées de la première paire de roues dentées (T1, R1), afin d'enregistrer plusieurs valeurs de mesure (MW) au niveau des flancs de dent des deux roues dentées,
d) détermination (S4) de l'enlèvement réel de la première paire de roues dentées (T1, R1) à partir des valeurs de mesure (MW),
e) détermination (S5) de divergences entre l'enlèvement réel et l'enlèvement théorique,
f) détermination (S6) de valeurs de correction (ΔVD ; ΔMD) en se basant sur les divergences,
g) définition (S7) d'une procédure de rodage par poudre abrasive adaptée en se basant sur les valeurs de correction (ΔVD ; ΔMD),
et
h) soit réalisation d'une autre procédure de rodage adaptée (S8, S2*) au niveau des deux roues dentées de la première paire de roues dentées (T1, R1),
i) soit réalisation d'une procédure de rodage (S8, S2*) adaptée au niveau des deux roues dentées d'une deuxième paire de roues dentées (T2, R2) de la pluralité (n) de paires de roues dentées (Tn, Rn) de construction similaire.

2. Procédé selon la revendication 1, **caractérisé en ce que** l'étape h) n'est réalisée au niveau de la première paire de roues dentées (T1, R1) que dans le cas où cette première paire de roues dentées (T1, R1) a, après la réalisation (S2) de la première procédure de rodage, une cote suffisamment grande.

3. Procédé selon la revendication 2, **caractérisé en ce que** la première paire de roues dentées (T1, R1) est sortie après l'étape h).

4. Procédé selon la revendication 1, **caractérisé en ce qu'**après l'étape i), on réalise une procédure de mesure selon les prescriptions de l'étape c) au niveau de la deuxième paire de roues dentées (T2, R2), et on réalise la détermination de l' enlèvement réel selon les prescriptions de l'étape d) afin de déterminer si la deuxième paire de roues dentées (T2, R2) se trouve au sein d'une fenêtre de tolérance de l'enlèvement théorique, suite à quoi la deuxième paire de roues dentées (T2, R2) est sortie dans le cas où l'enlèvement réel se trouve au sein de la fenêtre de tolérance.

5. Procédé selon la revendication 3, **caractérisé en ce que** les étapes b) à i) sont réalisées pour d'autres paires de roues dentées (Tn, Rn).

6. Procédé selon l'une des revendications 1 à 5, caractérisé en ce l'enlèvement théorique et l'enlèvement réel décrivent les rapports d'engrènement des deux roues dentées d'une paire de roues dentées (Tn, Rn) lorsque celles-ci se trouvent en prise l'une avec l'autre à l'état d'appariement.

7. Procédé selon l'une des revendications 1 à 6, **caractérisé en ce que** l'enlèvement est défini en tant que quantité avec une pluralité de valeurs d'enlèvement discrètes ou en tant que fonction de l'enlèvement.

8. Procédé selon l'une des revendications 1 à 7, **caractérisé en ce que** l'enlèvement théorique est déterminé lors d'une étape préparatoire au moyen d'une simulation, de préférence au moyen d'une simulation inversée, ou au moyen d'un procédé de calcul, où on utilise des grandeurs d'enlèvement, en particulier les coefficients de rodage (αL), qui sont à disposition pour une pluralité de points des flancs de dent des deux roues dentées de la paire de roues dentées (Tn, Rn).

9. Procédé selon l'une des revendications 1 à 8, **caractérisé en ce qu'**avant l'étape b) et/ou avant l'étape i), on réalise les étapes préparatoires suivantes :
- serrage d'une première roue dentée (Tn) d'une paire de roues dentées (Tn, Rn) dans un dispositif de rodage par poudre abrasive (10), de façon telle que la première roue dentée (Tn) peut pivoter autour d'un premier axe de rotation (TA) du dispositif de rodage (10),
- serrage d'une deuxième roue dentée (Rn) d'une paire de roues dentées (Tn, Rn) dans le dispositif de rodage par poudre abrasive (10), de façon telle que la deuxième roue dentée (Rn) peut pivoter autour d'un second axe de rotation (RA) du dispositif de rodage (10),
- exécution de déplacements relatifs au moyen du dispositif de rodage (10), afin d'amener la première roue dentée (Tn) en prise avec la deuxième roue dentée (Rn).

10. Procédé selon la revendication 9, **caractérisé en ce que**, pendant la première procédure de rodage et pendant la deuxième procédure de rodage, qui sont réalisées dans le dispositif de rodage (10), on applique une poudre abrasive de rodage de façon telle que, dans la zone d'engrènement des deux roues dentées (Tn, Rn), des particules abrasives de la poudre abrasive de rodage assurent l'enlèvement de matière au niveau des deux roues dentées (Tn, Rn).

11. Dispositif total (100) comportant un dispositif de rodage (10) et un dispositif de mesure (20), dans lequel
- le dispositif de rodage par poudre abrasive (10) comprend plusieurs axes à commande numérique (LA1, LA2, LA3, RA, TA) ainsi qu'une commande numérique (NC),
- le dispositif de rodage (10) est conçu pour réaliser une première procédure de rodage par poudre abrasive (S2) au niveau de deux roues dentées d'une première paire de roues dentées (T1, R1), et
- le dispositif de mesure (20) est conçu pour réaliser une procédure de mesure (S3) au niveau des deux roues dentées d'une première paire de roues dentées (T1, R1) afin d'enregistrer plusieurs valeurs de mesure (MW) au niveau des flancs de dents des deux roues dentées,
**caractérisé en ce que** le dispositif total (100) est conçu pour
• déterminer un enlèvement réel de la première paire de roues dentées (T1, R1) à partir des valeurs de mesure (MW),
• déterminer des divergences de l'enlèvement réel par rapport à l'enlèvement théorique,
• déterminer des valeurs de correction (ΔVD ; ΔMD) en se basant sur les divergences, et
• définir une seconde procédure de rodage par poudre abrasive (S8, S2*) adaptée, et dans lequel le dispositif de rodage (10) est conçu pour réaliser une seconde procédure de rodage (S8, S2*) adaptée au niveau des deux roues dentées de la première paire de roues dentées (T1, R1) et/ou au niveau de deux roues dentées d'une deuxième paire de roues dentées (T2, R2).

12. Dispositif total (100) selon la revendication 11, **caractérisé en ce que** les procédures de rodage par poudre abrasive (S2, S8) peuvent être définies en se basant sur des grandeurs d'enlèvement, en particulier en se basant sur des coefficients d'enlèvement (αL), qui sont mis à disposition pour une pluralité de points des flancs de dent des deux roues dentées de la paire de roues dentées (Tn, Rn) respectives.

13. Dispositif global (100) selon la revendication 12, **caractérisé en ce que** celui-ci comporte une interface de données ou une interface utilisateur (SN) qui permet de définir les grandeurs d'enlèvement, en particulier les coefficients d'enlèvement (αL).

14. Dispositif global (100) selon l'une des revendications 11 à 13, **caractérisé en ce que** le dispositif de rodage par poudre abrasive (10) et le dispositif de mesure (20) sont couplés par technique de communication.

15. Dispositif total (100) selon l'une des revendications 11 à 14, **caractérisé en ce que** le dispositif de rodage par poudre abrasive (10) et le dispositif de mesure (20) sont exécutés de façon intégrée telle qu'entre les rodages des deux roues dentées d'une paire de roues dentées (Tn, Rn) et la réalisation d'une procédure de mesure (S3) au niveau des deux roues dentées de la paire de roues dentées (Tn, Rn), aucun remontage des deux roues dentées n'est nécessaire.

16. Dispositif total (100) selon l'une des revendications 11 à 15, **caractérisé en ce que** celui-ci comprend au moins un logiciel ou au moins un module logiciel (SW, SW1, SW2), ce logiciel ou ce module logiciel (SW, SW1, SW2) étant conçu pour déterminer les divergences entre un enlèvement réel et un enlèvement théorique et pour entreprendre des adaptations de la première procédure de rodage par poudre abrasive (S2) afin de définir à partir de celles-ci la seconde procédure de rodage par poudre abrasive (S8, S2*) adaptée.
